# EUROPÄISCHE PATENTSCHRIFT

(11) **EP 2 626 526 B1**
(45) Veröffentlichungstag und Bekanntmachung des Hinweises auf die Patenterteilung: **10.09.2014**
(21) Anmeldenummer: 13154639.2
(22) Anmeldetag: 08.02.2013
(51) Int. Cl.: F01M 1/10, F01M 11/03

(54) **Ventileinrichtung**
Valve device
Dispositif de soupape

(30) Priorität: 10.02.2012 DE 102012202044
(43) Veröffentlichungstag der Anmeldung: 14.08.2013
(73) Patentinhaber: MAHLE International GmbH, 70376 Stuttgart (DE)
(72) Erfinder: Layer, Markus, 71404 Korb (DE); Ruppert, Hans-Martin, 73760 Ostfildern (DE); Saupe, Kai, 71032 Böblingen (DE); Schmiedl, Kai-Torsten, 71155 Altdorf (DE)
(74) Vertreter: BRP Renaud & Partner

(56) Entgegenhaltungen:
- EP-A1- 1 580 467
- EP-A1- 2 327 862
- DE-A1- 1 908 240
- DE-A1-102008 020 609
- DE-A1-102008 032 494
- DE-U1- 29 708 074
- JP-A- S55 104 511

## Beschreibung

Die vorliegende Erfindung betrifft eine Ventileinrichtung innerhalb einer Strömungsleitung eines Verbrennungsmotors, gemäß dem Oberbegriff des Anspruchs 1. Die Erfindung betrifft außerdem ein, mit einer derartigen Ventileinrichtung ausgestattetes Ölfiltermodul, einen Verbrennungsmotor sowie ein, mit einem derartigen Verbrennungsmotor ausgestattetes Kraftfahrzeug.

Aus der EP 2 327 862 A1 ist eine gattungsgemäße Ventileinrichtung in einer Strömungsleitung eines Verbrennungsmotors, bekannt, die einen Drehschieber aufweist, über den je nach Drehstellung ein Durchfluss zwischen einer Hauptleitung und einer Bypassleitung aufteilbar ist

Aus der JP H04 92170 A1 ist eine als druckempfindliches Rückschlagventil ausgebildete Ventileinrichtung bei einem Öl-Filter/Öl-Kühler bekannt.

Ein Großteil der Energie von Förderpumpen in Kreisläufen von Verbrennungsmotoren, bspw. in Ölkreisläufen, wird üblicherweise dadurch verbraucht, dass die Förderpumpe gegen Strömungswiderstände fördern muss. Untersuchungen haben dabei gezeigt, dass lediglich 10% der Förderenergie einer Förderpumpe für die eigentliche Förderung der Flüssigkeit verwendet werden, während 90% der Förderenergie für das Überwinden der Strömungswiderstände innerhalb des Kreislaufs aufgezehrt werden.

Die Erfindung beschäftigt sich daher mit dem Problem, für eine Ventileinrichtung der gattungsgemäßen Art, eine verbesserte oder zumindest eine andere Ausführungsform anzugeben, die insbesondere den Einsatz leistungsschwächerer Förderpumpen bei gleicher Förderleistung ermöglicht. Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, bei einer gattungsgemäßen Ventileinrichtung einen Drehschieber vorzusehen, über den je nach Drehstellung ein Durchfluss zwischen einer Hauptleitung und einer Bypassleitung aufteilbar ist und gleichzeitig in diesem Drehschieber ein Bypassventil anzuordnen, das derart ausgebildet ist, dass es bei einem vordefinierten Druck, insbesondere einem Grenzdruck, in der Hauptleitung öffnet und eine zumindest teilweise Durchflussumlenkung in die Bypassleitung bewirkt. Durch die erfindungsgemäße Ventileinrichtung ist es somit möglich, ab einem vordefinierten Ansteigen des Drucks innerhalb der Hauptleitung eine Umgehung zu öffnen und zwar durch das in den Drehschieber integrierte Bypassventil, wodurch der von einer Pumpe aufzubringende Förderdruck und damit auch die von der Pumpe aufzubringende Förderleitung reduziert und damit optimiert werden können. Durch die Integration des Bypassventils in den Drehschieber der Ventileinrichtung kann zudem eine besonders kompakte Bauweise erzielt werden, was in beengten modernen Motorräumen ebenfalls von großem Vorteil ist.

Bei einer vorteilhaften Weiterbildung der erfindungsgemäßen Lösung ist eine Antriebseinrichtung zum Drehen des Drehschiebers vorgesehen, insbesondere ein Kennfeldthermostat, eine Magneteinrichtung und/oder ein elektrischer Motor. Bereits die Aufzählung lässt dabei erahnen, wie vielfältig die Möglichkeit der Ansteuerung der erfindungsgemäßen Ventileinrichtung ist, so dass diese nicht nur im Bereich eines Ölkreislaufs eines Verbrennungsmotors in einem Kraftfahrzeug, sondern auch in anderen Kreisläufen, wie beispielsweise einem Kühlkreislauf einsetzbar ist.

Bei einer vorteilhaften Weiterbildung der erfindungsgemäßen Lösung, weist die Ventileinrichtung eine drehbare Lochwalze auf. Die drehbare Lochwalze ist dabei leicht gelagert, so dass zum Verstellen derselben äußerst wenig Energie aufgewendet werden muss. Die Lochwalze ist darüber hinaus derart konzipiert, dass sie zumindest eine Durchgangöffnung aufweist, die bei geöffneter Ventileinrichtung mit der Hauptleitung fluchtend kommuniziert, so dass die Ventileinrichtung in deren geöffnetem Zustand nahezu keinen Strömungswiderstand für die strömende Flüssigkeit darstellt. Durch ein Verdrehen der Walze, was - wie vorher beschrieben - äußerst einfach und energiearm möglich ist, wird die zunächst fluchtend zur Strömungsleitung angeordnete Durchgangsöffnung verdreht und irgendwann verschlossen, so dass ein Strömungsfluss durch die Ventileinrichtung unterbrochen ist. Mit der erfindungsgemäßen Ventileinrichtung ist es vorzugsweise möglich, in deren geöffnetem Zustand, eine Druckdifferenz Δp von ungefähr Null zu erhalten, wobei die Druckdifferenz Δp eine Differenz eines Fluiddrucks vor und nach der Ventileinrichtung darstellt. Durch den insgesamt geringeren Strömungswiderstand bei der Verwendung derartiger Ventileinrichtungen, ist es möglich, die für die Förderung der Flüssigkeiten verantwortlichen Pumpen kleiner zu dimensionieren und dadurch einerseits Energie und andererseits Bauraum einsparen zu können.

Mit der erfindungsgemäßen Ventileinrichtung ist es somit möglich, den Strömungswiderstand im Bereich der Ventileinrichtung deutlich zu reduzieren, insbesondere wenn die Ventileinrichtung in Richtung der Hauptleitung zwar vollständig geöffnet, dort aber kein genügend großer Abfluss möglich ist. Durch das erfindungsgemäß vorgesehene Bypassventil im Drehschieber der Ventileinrichtung kann in diesem Fall der Druck in der Hauptleitung reduziert und zumindest ein Teilstrom an der Hauptleitung vorbei, nämlich über die Bypassleitung, abgeleitet werden. Selbstverständlich ist dabei eine Umlenkung des Durchflusses über das Bypassventil auch in Zwischendrehstellungen des Drehschiebers möglich, in denen bereits eine Aufteilung zwischen Hauptleitung und Bypassleitung erfolgt.

Die Erfindung beruht weiter auf dem allgemeinen Gedanken, bei einem Ölfiltermodul in einem Kraftfahrzeug mit einem Ölfilter, einem Öl-Wasser-Wärmetauscher und einer zuvor beschriebenen Ventileinrichtung letztere derart zu platzieren, dass diese eingangsseitig mit dem Ölfilter und ausgangsseitig über die Hauptleitung mit dem Öl-Wasser-Wärmetauscher verbunden ist, wogegen die Ventileinrichtung ausgangsseitig zusätzlich mit einer Bypassleitung verbunden ist, die den Öl-Wasser-Wärmetauscher umgeht. Das Ölfiltermodul wird üblicherweise bei einem Verbrennungsmotor in einem Kraftfahrzeug eingesetzt, wobei der Drehschieber der Ventileinrichtung bei kaltem Verbrennungsmotor und dabei bei kaltem Öl so verdreht ist, dass das Öl zumindest überwiegend in die Bypassleitung und damit am Öl-Wasser-Wärmetauscher vorbeigeleitet wird. Bei sich erwärmendem Öl wird der Drehschieber verdreht, so dass zunehmend Öl über den Öl-Wasser-Wärmetauscher und weniger über die Bypassleitung an diesem vorbeigeleitet wird. Bei sehr heißem Öl wird dieses vorzugsweise zu 100% über den Öl-Wasser-Wärmetauscher geleitet, so dass die Bypassleitung verschlossen ist. Kommt es im Bereich der Hauptleitung, das heißt insbesondere im Bereich des Öl-Wasser-Wärmetauschers zu einem Druckanstieg, so öffnet das Bypassventil ab einem vordefinierten Druck und leitet zumindest einen Teilölstrom über die Bypassleitung an dem Öl-Wasser-Wärmetauscher vorbei. Die Ventileinrichtung ist dabei auf einer Reinseite des Ölfilters angeordnet und beispielsweise in ein Filtergehäuse des Ölfilters bzw. des Ölfiltermoduls integriert. Mit dem erfindungsgemäßen Ölfiltermodul kann ein optimaler Ölfluss im Ölkreislauf des Verbrennungsmotors bei gleichzeitig minimaler Ölpumpenleistung erreicht werden, wodurch eine nicht unbeachtliche CO₂-Reduzierung erreicht werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: ein Ölfiltermodul mit einer erfindungsgemäßen Ventileinrichtung,
- Fig. 2: eine Schnittdarstellung durch das Ölfiltermodul gemäß der Fig. 1,
- Fig. 3: eine Schnittdarstellung orthogonal zur Fig. 2.

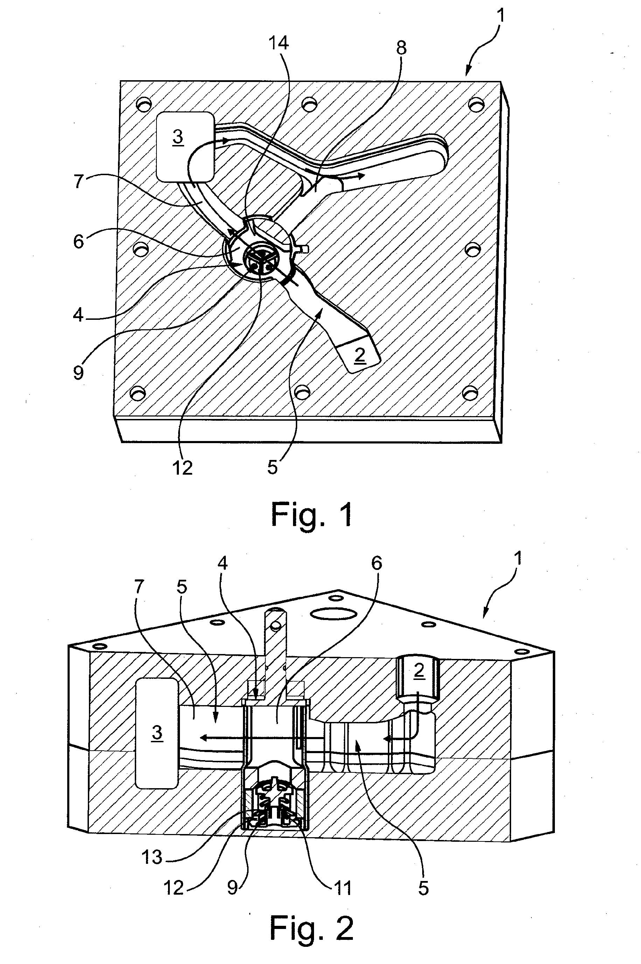

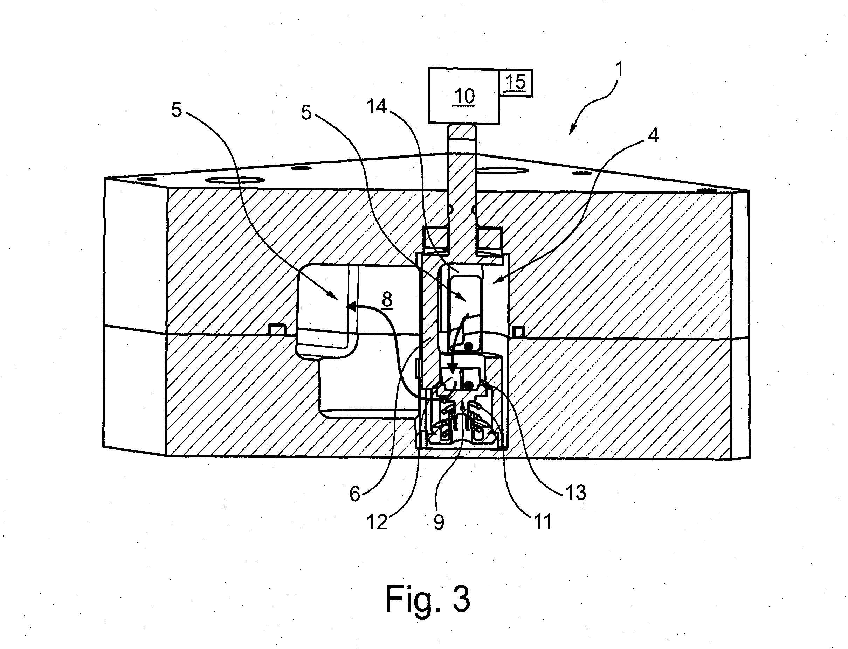

Entsprechend der Fig. 1, weist ein erfindungsgemäßes Ölfiltermodul 1, welches beispielsweise im Bereich eines Verbrennungsmotors eines Kraftfahrzeuges angeordnet ist, ein Ölfilter 2, einen Öl-Wasser-Wärmetauscher 3 sowie eine Ventileinrichtung 4 auf. Die Ventileinrichtung 4 ist dabei in einer Strömungsleitung 5 angeordnet. Erfindungsgemäß besitzt nun die Ventileinrichtung 4 einen Drehschieber 6, über den je nach Drehstellung ein Durchfluss zwischen einer Hauptleitung 7 und einer Bypassleitung 8 aufteilbar ist, wobei zusätzlich im Drehschieber 6 ein Bypassventil 9 angeordnet ist, das derart ausgebildet ist, dass es bei einem vordefinierten Druck, insbesondere einem Grenzdruck, in der Hauptleitung 7 öffnet und eine zumindest teilweise Durchflussumlenkung in die Bypassleitung 8 bewirkt. Das Bypassventil 9 ist dabei insbesondere in den Schnittdarstellungen gemäß den Fig. 2 und 3 besonders gut zu sehen.

Zum Drehen des Drehschiebers 6 kann eine Antriebseinrichtung 10 vorgesehen sein, die beispielsweise als Kennfeldthermostat, als Magneteinrichtung und/oder als elektrischer Motor ausgebildet ist. Der Drehschieber 6 ist dabei in der Art einer Lochwalze ausgebildet und beherbergt in seinem der Antriebseinrichtung 10 abgewandten Endbereich das Bypassventil 9. Das Bypassventil 9 kann beispielsweise als mechanisches, federbelastetes Druckventil ausgebildet sein und hierzu eine Feder 11 aufweisen, welche einen Ventilteller 12 gegen einen Ventilsitz 13 vorspannt. Der Ventilsitz 13 ist dabei im Drehschieber 6 der Ventileinrichtung 4 angeordnet.

Vorzugsweise (zeichnerisch nicht dargestellt) weist eine Durchgangsöffnung 14 des Drehschiebers 6 einen zum Innendurchmesser der Strömungsleitung 5 fluchtenden Innendurchmesser auf, wodurch ein Strömungswiderstand der Ventileinrichtung 4 in geöffnetem Zustand minimiert werden kann.

Der Drehschieber 6 kann dabei um beliebige Winkelstellung verdreht werden, so dass eine Durchflussaufteilung zwischen beispielsweise 100% zum Öl-Wasser-Wärmetauscher 3, das 100% in die Hauptleitung 7 oder 100° in die Bypassleitung 8 denkbar sind. Ebenso denkbar sind beliebige Zwischenstellungen, so dass beispielsweise ein Teilstrom über die Hauptleitung 7 und ein weiterer Teilstrom über die Bypassleitung 8 geleitet wird. Die Bypassleitung 8 umgeht dabei gemäß der Fig. 1 den Öl-Wasser-Wärmetauscher 3.

Ist das Öl kalt, das heißt beispielsweise bei einem Starten des Verbrennungsmotors, so wird dieses zu vorzugsweise 100% am Öl-Wasser-Wärmetauscher 3 vorbeigeleitet, bis der Verbrennungsmotor seine Betriebstemperatur erreicht. Mit zunehmender Öltemperatur wird der Drehschieber 6 der Ventileinrichtung 4 von der Antriebseinrichtung 10 verdreht, so dass nunmehr ein zunehmender Ölstrom über den Öl-Wasser-Wärmetauscher 3 oder generell einen Wärmetauscher geleitet und das Öl gekühlt wird. Bei hochbelastetem Verbrennungsmotor und einhergehend damit hohen Öltemperaturen wird vorzugsweise der gesamte Ölstrom über den Öl-Wasser-Wärmetauscher 3 geleitet, um das Öl zu kühlen. Steigt der Druck im Bereich des Öl-Wasser-Wärmetauschers 3 bzw. in der Hauptleitung 7 über einen vordefinierten Druck, beispielsweise einen Grenzdruck an, so wird der Ventilteller 12 des Bypassventils 9 von seinem Ventilsitz 13 abgehoben, wodurch ein Teilstrom des Öls über die Bypassleitung 8 geführt und dadurch der Druck in der Hauptleitung 7 und allgemein damit ein Strömungswiderstand reduziert werden können.

Die Fig. 1 und 2 zeigen dabei die Stellung des Drehschiebers 6, in welcher dieser die Bypassleitung 8 verschließt und den Ölstrom vorzugsweise vollständig dem Öl-Wasser-Wärmetauscher 3 zuleitet. Die Fig. 3 zeigt in ihrer Schnittdarstellung denjenigen Zustand, bei dem der Druck in dem Öl-Wasser-Wärmetauscher 3 bzw. der Hauptleitung 7 über den vordefinierten Druck angestiegen ist und damit ein Öffnen des Bypassventils 9 bewirkt. Durch das Öffnen des Bypassventils 9, was prinzipiell durch ein Abheben des Ventiltellers 12 und zugehörigem Ventilsitz 13 bewirkt wird, wird zumindest ein Teilstrom des Öls in die Bypassleitung 8 umgeleitet und dadurch der Druck in der Hauptleitung 7 und generell der Strömungswiderstand reduziert. Die Einstellung des Drucks, bei welchem das Bypassventil 9 öffnet, kann über die Auswahl der Feder 11 des Bypassventils 9 erfolgen.

Selbstverständlich kann die erfindungsgemäße Ventileinrichtung 4 nicht nur im Bereich eines Ölfiltermoduls 1, wie dies gemäß den Fig. 1 bis 3 gezeigt ist, eingesetzt werden, sondern generell sämtlichen Einsatzgebieten, bei welchem eine Reduzierung einer Förderleistung einer Pumpe gewünscht ist. Durch die Integration des Bypassventils 9 in den Drehschieber 6 der Ventileinrichtung 4 wurde zudem ein Bauraum optimierte Lösung gefunden, die insbesondere dem immer geringer werdenden Platzangebot in modernen Motorräumen gerecht wird.

Das gemäß den Fig. 1 bis 3 gezeigte Ölfiltermodul 1 kann in beliebigen Verbrennungsmotoren bzw. beliebigen Kraftfahrzeugen Anwendung finden. Durch die Ventileinrichtung 4 und insbesondere das Ölfiltermodul 1 kann ein optimaler Ölfluss im Verbrennungsmotor bei gleichzeitig minimierter Ölpumpenleistung erreicht werden, wodurch nicht nur ein reduzierter Energiebedarf zum Betrieb der Pumpe, sondern zugleich auch eine CO₂-Reduzierung erreicht werden können, was im Hinblick auf stetig strenger werdende Umweltauflagen von besonderem Vorteil ist.

Sowohl der Öl-Wasser-Wärmetauscher 3 als auch das Ölfilter 2 können, müssen aber nicht Bestandteil des Ölfiltermoduls 1 sein, so dass diese auch separat angeordnet werden können. Zur Ansteuerung der Antriebseinrichtung 10 kann darüber hinaus ein Motorsteuergerät 15 vorgesehen sein.

## Patentansprüche

1. Ventileinrichtung (4) in einer Strömungsleitung (5) eines Verbrennungsmotors, insbesondere innerhalb eines Ölkreislaufs, wobei die Ventileinrichtung (4) einen Drehschieber (6) aufweist, über den je nach Drehstellung ein Durchfluss zwischen einer Hauptleitung (7) und einer Bypassleitung (8) aufteilbar ist
**dadurch gekennzeichnet,**
**dass** im Drehschieber (6) ein Bypassventil (9) angeordnet ist, das derart ausgebildet ist, dass es bei einem vordefinierten Druck in der Hauptleitung (7) öffnet und eine zumindest teilweise Durchflussumlenkung in die Bypassleitung (8) bewirkt.

2. Ventileinrichtung nach Anspruch 1
**dadurch gekennzeichnet,**
**dass** eine Antriebseinrichtung (10) zum Drehen des Drehschiebers (6) vorgesehen ist, insbesondere ein Kennfeldthermostat, eine Magneteinrichtung und/oder ein elektrischer Motor.

3. Ventileinrichtung nach Anspruch 1 oder 2,
**dadurch gekennzeichnet,**
**dass** der Drehschieber (6) in der Art einer Lochwalze ausgebildet ist.

4. Ventileinrichtung nach einem der Ansprüche 1 bis 3,
**dadurch gekennzeichnet,**
**dass** das Bypassventil (8) als mechanisches federbelastetes Druckventil ausgebildet ist.

5. Ventileinrichtung nach einem der Ansprüche 1 bis 4,
**dadurch gekennzeichnet,**
**dass** eine Durchgangsöffnung (14) des Drehschiebers (6) einen zum Innendurchmesser der Strömungsleitung (5) fluchtenden Innendurchmesser aufweist.

6. Ölfiltermodul (1) in einem Kraftfahrzeug mit einem Ölfilter (2), einem Öl-Wasser-Wärmetauscher (3) und einer Ventileinrichtung (4) nach einem der vorhergehenden Ansprüche, wobei die Hauptleitung (7) zwischen dem Ölfilter (2) und dem Öl-Wasser-Wärmetauscher (3) verläuft und wobei die Bypassleitung (8) den Öl-Wasser-Wärmetauscher (3) umgeht.

7. Verbrennungsmotor mit einem Ölfiltermodul (1) nach Anspruch 6.

8. Kraftfahrzeug mit einem Verbrennungsmotor nach Anspruch 7, wobei zur Ansteuerung der Antriebseinrichtung (10) der Ventileinrichtung (4) ein Motorsteuergerät (15) vorgesehen ist.

## Claims

1. A valve apparatus (4) in a flow line (5) of an internal combustion engine, particularly within an oil circuit, wherein the valve apparatus (4) has a rotary slide (6), by means of which a throughflow can be divided between a main line (7) and a bypass line (8), depending on the rotational position, **characterised in that** a bypass valve (9) is arranged in the rotary slide (6), which is constructed in such a manner that the same opens in the main line (7) at a predefined pressure and effects an at least partial flow redirection into the bypass line (8).

2. The valve apparatus according to Claim 1, **characterised in that** a drive apparatus (10) is provided for rotating the rotary slide (6), particularly a characteristic-map thermostat, a magnetic apparatus and/or an electric motor.

3. The valve apparatus according to Claim 1 or 2, **characterised in that** the rotary slide (6) is constructed in the manner of a perforated roller.

4. The valve apparatus according to one of Claims 1 to 3, **characterised in that** the bypass valve (8) is constructed as a mechanical spring-loaded pressure valve.

5. The valve apparatus according to one of Claims 1 to 4, **characterised in that** a through opening (14) of the rotary slide (6) has an internal diameter flush to the internal diameter of the flow line (5).

6. An oil filter module (1) in a motor vehicle, having an oil filter (2), an oil/water heat exchanger (3) and a valve apparatus (4) according to one of the preceding claims, wherein the main line (7) runs between the oil filter (2) and the oil/water heat exchanger (3) and wherein the bypass line (8) bypasses the oil/water heat exchanger (3).

7. An internal combustion engine having an oil filter module (1) according to Claim 6.

8. A motor vehicle having an internal combustion engine according to Claim 7, wherein a motor control device (15) is provided for controlling the drive apparatus (10) of the valve apparatus (4).

## Revendications

1. Dispositif de soupape (4) dans une conduite d'écoulement (5) d'un moteur à combustion interne, notamment à l'intérieur d'un circuit d'huile, dans lequel le dispositif de soupape (4) présente un tiroir rotatif (6), par l'intermédiaire duquel en fonction de la position de rotation un flux entre une conduite principale (7) et une conduite de dérivation (8) peut être divisé, **caractérisé en ce que** dans le tiroir rotatif (6) une soupape de dérivation (9) est disposée, qui est conçue de telle sorte qu'elle s'ouvre en présente d'une pression prédéfinie dans la conduite principale (7) et provoque au moins partiellement une déviation du débit dans la conduite de dérivation (8).

2. Dispositif de soupape selon la revendication, **caractérisé en ce que** un dispositif d'entraînement (10) pour tourner le tiroir rotatif (6) est prévu, notamment un thermostat à charge caractéristique, un dispositif magnétique et/ou un moteur électrique.

3. Dispositif de soupape selon la revendication 1 ou 2, **caractérisé en ce que** le tiroir rotatif (6) est conçu à la manière d'un cylindre perforé.

4. Dispositif de soupape selon une des revendications 1 à 3, **caractérisé en ce que** la soupape de dérivation (8) est conçue comme une soupape de pression chargée par ressort mécanique.

5. Dispositif de soupape selon une des revendications 1 à 4, **caractérisé en ce qu'**une ouverture traversante (14) du tiroir rotatif (6) présente un diamètre intérieur s'alignant avec le diamètre intérieur de la conduite d'écoulement (5).

6. Module de filtre à huile (1) dans un véhicule automobile comportant un filtre à huile (2), un échangeur thermique huile-eau (3) et un dispositif de soupape (4) selon une des revendications précédentes, dans lequel la conduite principale (7) s'étend entre le filtre à huile (2) et l'échangeur thermique huile-eau (3) et dans lequel la conduite de dérivation (8) contourne l'échangeur thermique huile-eau (3).

7. Moteur à combustion comportant un module de filtre à huile (1) selon la revendication 6.

8. Véhicule automobile comportant un moteur à combustion interne selon la revendication 7, dans lequel pour piloter le dispositif d'entraînement (10) du dispositif de soupape (4) un appareil de commande de moteur (15) est prévu.
